(19) Europäisches Patentamt
European Patent Office
Office européen des brevets

(11) **EP 2 905 439 B1**

(12) **EUROPEAN PATENT SPECIFICATION**

(45) Date of publication and mention
of the grant of the patent:
**06.12.2017  Bulletin 2017/49**

(21) Application number: **12870926.8**

(22) Date of filing: **07.09.2012**

(51) Int Cl.:
*F01N 3/08* (2006.01)    *F01N 3/023* (2006.01)
*F01N 3/025* (2006.01)    *F01N 3/029* (2006.01)
*F01N 3/36* (2006.01)    *F01N 3/20* (2006.01)
*F01N 9/00* (2006.01)    *F01N 3/035* (2006.01)
*F01N 13/00* (2010.01)

(86) International application number:
**PCT/JP2012/072912**

(87) International publication number:
**WO 2014/038067 (13.03.2014 Gazette 2014/11)**

(54) **EXHAUST GAS PURIFICATION SYSTEM FOR INTERNAL COMBUSTION ENGINE**

ABGASREINIGUNGSSYSTEM FÜR EINEN VERBRENNUNGSMOTOR

SYSTEME DE PURIFICATION DE GAZ D'ECHAPPEMENT POUR UN MOTEUR À COMBUSTION INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.08.2015  Bulletin 2015/33**

(73) Proprietor: **TOYOTA JIDOSHA KABUSHIKI
KAISHA**
**Toyota-shi, Aichi-ken, 471-8571 (JP)**

(72) Inventor: **OTA, Hirohiko**
**Toyota-shi, Aichi-ken,  471-8571 (JP)**

(74) Representative: **Kuhnen & Wacker
Patent- und Rechtsanwaltsbüro
Prinz-Ludwig-Straße 40A
85354 Freising (DE)**

(56) References cited:
**WO-A1-2011/082493    WO-A2-2011/060792
DE-A1- 10 322 155    DE-A1-102009 042 087
JP-A- 2003 201 836    JP-A- 2006 291 821
JP-A- 2011 127 442**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 905 439 B1

## Description

TECHNICAL FIELD

The present invention relates to an exhaust gas purification system for an internal combustion engine.

BACKGROUND ART

Conventionally, various additive feeders provided with an injection valve for supplying additives to a catalyst that purifies exhaust gas components emitted from an internal combustion engine are known. Such additive feeders adjust the amount of additive injected through an injection valve (hereinafter, referred to as "addition amount") in accordance with the amount of the exhaust gas component emitted from the internal combustion engine.

For example, a device disclosed in Patent Document 1 is configured to inject additive while repeating opening and closing of the injection valve. The additive in accordance with the amount of the exhaust gas component is injected through the injection valve by controlling the length of the one cycle for opening and closing the injection valve (hereinafter, referred to as opening and closing cycle), and the valve opening period of the injection valve in the opening and closing cycle.

Further, Patent Document 2 discloses an exhaust purification device and a respective method for an internal combustion engine. The exhaust purification device is equipped with an exhaust emission purification catalyst installed in an exhaust pipe of the internal combustion engine and promoting the exhaust emission control effect in association with the influx of an amount of reducer, an injection nozzle installed in the exhaust pipe upstream of the catalyst and promoting the exhaust emission control effect by injecting the reducer into the exhaust gas flowing into the catalyst, and an electronic control unit which controls the valve opening motion of the nozzle for nozzle cooling in association with an over-heat of the nozzle resulting from a contact with the exhaust gas and cools the nozzle with the injection of the reducer.

Prior Art Documents

Patent Documents

Patent Document 1: Japanese Laid-Open Patent Publication No. 2010-71255
Patent Document 2 : German Laid-Open Patent Publication No. DE 103 22 155 A1

SUMMARY OF THE INVENTION

Problems that the Invention is to Solve

The greater the number of times the injection valve opens, the more worn the components configuring the injection valve become. This degrades the reliability of the injection valve.

Accordingly, the valve opening period in the opening and closing cycle is prolonged as long as possible so that the addition amount per injection is increased. The opening and closing cycle of the injection valve is prolonged in accordance with the increase of the addition amount per injection so that the addition amount to be injected in a certain period is not changed. When the opening and closing cycle is prolonged as long as possible by prolonging the valve opening period as described above, the number of times the injection valve opens in the certain period becomes less so that the reduction of reliability of the injection valve is limited.

However, the injection valve is heated by conducting current therethrough while the injection valve is open Accordingly, when the valve opening period is prolonged, the injection valve is likely to be excessively heated due to the increase of the current conducting time.

Accordingly, it is an object of the present invention to provide an exhaust gas purification system or an additive feeder for an internal combustion engine that limits excessive heating of the injection valve to improve the reliability of the injection valve.

Means for Solving the Problems

To achieve the above described object, an exhaust gas purification system for an internal combustion engine, including: a catalyst; an injection valve; and a control unit is provided. The catalyst purifies an exhaust gas component emitted from the internal combustion engine. The injection valve injects and adds an additive to the catalyst. The control unit controls an opening and closing cycle of the injection valve and a valve opening period of the injection valve in the opening and closing cycle to allow the injection valve to inject an amount of the additive in accordance with an amount of emission of the exhaust gas component. The control unit prolongs the valve opening period as a temperature of the injection valve becomes lower, while the control unit prolongs the opening and closing cycle as the valve opening period becomes longer.

The period from when the current starts conducting through the injection valve to when the temperature of the injection valve reaches a permissible temperature is prolonged as the temperature of the injection valve becomes lower. The above described control unit prolongs the valve opening period as the temperature of the injection valve becomes lower. Accordingly, the valve opening period is prolonged while appropriately limiting excessive heating of the injection valve.

Also, the control unit prolongs the opening and closing cycle of the injection valve as the valve opening period becomes longer. Accordingly, as the valve opening period becomes longer, the number of times the injection valve opens in a certain period is reduced. This improves the reliability of the injection valve.

When the valve opening period is changed in accordance with the temperature of the injection valve, the addition amount per injection is changed. Accordingly, the amount of additive injected in a certain period is changed as well. However, the above described control unit prolongs the opening and closing cycle of the injection valve as the valve opening period of the injection valve becomes longer. Accordingly, as the valve opening period is longer and the addition amount per injection becomes greater, the number of times the injection valve opens in the certain period is reduced. Accordingly, even if the valve opening period is changed in accordance with the temperature of the injection valve, the amount of the additive injected in a certain period is maintained at an amount in accordance with the amount of emission of the exhaust gas component.

According to the above described exhaust gas purification system, the reliability of the injection valve is improved while limiting excessive heating of the injection valve.

According to an aspect of the present invention, the control unit corrects a maximum permissible period for a continuous current conducting period of the injection valve to be longer as the temperature of the injection valve becomes lower, and sets the corrected maximum permissible period to the valve opening period of the injection valve.

In the period in which the injection valve is open, the current is conducted through the injection valve. To limit the heat in the continuous current conducting time within a permissible range, the maximum permissible time with respect to the continuous current conducting time is set for the injection valve. Accordingly, when the maximum permissible time is set as the valve opening period of the injection valve, the excessive heating of the injection valve is limited, while the valve opening period is prolonged to maximum. The above described maximum permissible time becomes longer as the temperature of the injection valve becomes lower. The control unit corrects the above described maximum permissible time set as the valve opening period of the injection valve to be longer as the temperature of the injection valve becomes lower. Therefore, the valve opening period is prolonged as long as possible in accordance with the temperature state of the injection valve.

According to an aspect of the present invention, the control unit sets the opening and closing cycle of the injection valve to a fixed value when the amount of the additive in accordance with the amount of emission of the exhaust gas component is less than a reference value.

As described above, the control unit prolongs the valve opening period as the temperature of the injection valve becomes lower, and prolongs the opening and closing cycle as the valve opening period becomes longer. In the case where the opening and closing cycle of the injection valve is prolonged as described above, when the amount of the additive in accordance with the amount of emission of the exhaust gas component is less, a valve closing period in which the injection valve is closed in the opening and closing cycle is prolonged. Accordingly, the injection interval of the additive is excessively prolonged so that the amount of purifying the exhaust gas components is likely to be reduced.

The above described control unit sets the opening and closing cycle as the fixed value when the amount of the additive in accordance with the amount of emission of the exhaust gas components is less than the reference value. When the opening and closing cycle of the injection valve is set as the fixed value, prolongation of the opening and closing cycle due to variable setting is limited. Accordingly, the injection interval of the additive when the amount of the additive injected through the injection valve is less is appropriately set so that the reduction of the amount of purifying the exhaust gas component is limited. It is desirable to set, as the above described reference value, the amount of the additive by which the valve closing period of the injection valve is prolonged to an extent that the amount of purifying the exhaust gas components is reduced. It is also desirable to set, as the above described fixed value, the opening and closing period by which the injection interval of the additives necessary for appropriately maintaining the amount of purifying the exhaust gas components is obtained. Even if the opening and closing cycle is fixed, the valve opening period is variably set so that the amount of the additive in accordance with the amount of emission of the exhaust gas component is injected through the injection valve.

According to an aspect of the present invention, the catalyst purifies NOx in the exhaust gas, and the additive is a reducing agent that reduces NOx.

BRIEF DESCRIPTION OF THE DRAWINGS

Fig. 1 is a diagram schematically showing an exhaust gas purification system or an additive feeder according to a first embodiment of the present invention, and an internal combustion engine to which the exhaust gas purification system is applied and a peripheral configuration thereof;

Fig. 2 is a time chart showing an operation state of a urea injection valve;

Fig. 3 is a flowchart showing a procedure of an addition process of aqueous urea solution according to the present embodiment;

Fig. 4 is a conceptual diagram showing a manner in which a temperature of the injection valve is estimated;

Fig. 5 is a graph showing a relationship between the vehicle speed and a vehicle speed correction value;
Fig. 6 is a graph showing a relationship between the corrected temperature of the urea injection valve and a temperature correction value; and
Fig. 7 is a flowchart showing a procedure of an addition process of aqueous urea solution according to a second embodiment.

MODES FOR CARRYING OUT THE INVENTION

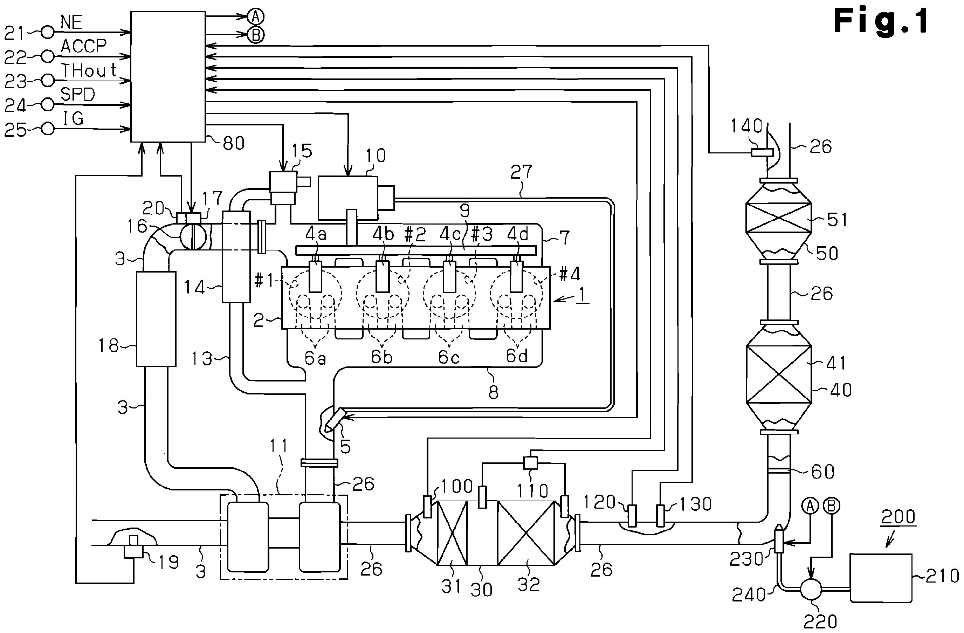

Hereinafter, an exhaust gas purification system for an internal combustion engine according to a first embodiment of the present invention will be described with reference to Figs. 1 to 6.

Fig. 1 is a configuration diagram schematically showing a diesel engine (hereinafter, referred to as simply "engine") to which the exhaust gas purification system according to the present embodiment is applied, and peripheral components thereof.

A plurality of cylinders #1 to #4 are formed in an engine 1. A plurality of fuel injection valves 4a to 4d are attached to a cylinder head 2. The fuel injection valves 4a to 4d inject fuel to combustion chambers of the corresponding cylinders #1 to #4. Intake ports for introducing new air into the cylinders and exhaust ports 6a to 6d for exhausting combustion gas out of the cylinders, respectively corresponding to the cylinders #1 to #4 are formed in the cylinder head 2.

The fuel injection valves 4a to 4d are connected to a common rail 9 that accumulates high pressure fuel. The common rail 9 is connected to a supply pump 10. The supply pump 10 draws fuel in a fuel tank and supplies the common rail 9 with the high pressure fuel. The high pressure fuel supplied to the common rail 9 is injected into the cylinders through the corresponding fuel injection valves 4a to 4d when the fuel injection valves 4a to 4d are open.

An intake manifold 7 is connected to the intake port. The intake manifold 7 is connected to an intake passage 3. An intake throttle valve 16 that adjusts the amount of intake air is provided in the intake passage 3.

An exhaust manifold 8 is connected to the exhaust ports 6a to 6d. The exhaust manifold 8 is connected to an exhaust passage 26.

A turbocharger 11 that supercharges the intake air introduced into the cylinders using the exhaust gas pressure is provided in the middle of the exhaust passage 26. An intercooler 18 is provided in the intake passage 3 between an intake side compressor of the turbocharger 11 and the intake throttle valve 16. The intercooler 18 provides for cooling of the intake air the temperature of which has been increased due to supercharging performed by the turbocharger 11.

A first purification member 30 that purifies the exhaust gas is provided in a section of the exhaust passage 26 that is downstream of an exhaust side turbine of the turbocharger 11. The first purification member 30 contains an oxidation catalyst 31 and a DPF catalyst 32, which are arranged in series with respect to the flow direction of the exhaust gas.

The oxidation catalyst 31 supports a catalyst that oxidizes HC in the exhaust gas. The DPF catalyst 32 is configured by a porous ceramic as a filter that catches particulate matter (PM) in the exhaust gas, and supports a catalyst that promotes oxidization of the PM. The PM in the exhaust gas is caught when passing through a porous wall of the DPF catalyst 32.

A fuel addition valve 5 for supplying the oxidation catalyst 31 and the DPF catalyst 32 with fuel as additives is provided in the vicinity of a collective part of the exhaust manifold 8. The fuel addition valve 5 is connected to the supply pump 10 via a fuel feeding tube 27. The position at which the fuel addition valve 5 is arranged may be changed as long as it is located upstream from the first purification member 30 in the exhaust system.

Further, a second purification member 40 that purifies the exhaust gas is provided in a section of the exhaust passage 26 that is downstream of the first purification member 30. The second purification member 40 contains a selective reduction type NOx catalyst (hereinafter, referred to as SCR catalyst) 41 The SCR catalyst 41 is a NOx purification catalyst that purifies nitrogen oxide (NOx) as a constituent contained in the exhaust gas using a reducing agent.

Moreover, a third purification member 50 that purifies the exhaust gas is provided in a section of the exhaust passage 26 that is downstream of the second purification member 40. The third purification member 50 contains an ammonia oxidation catalyst 51 that purifies ammonia in the exhaust gas.

The engine 1 has an aqueous urea solution feeding mechanism 200, which supplies the above described SCR catalyst 41 with aqueous urea solution as additives. The aqueous urea solution feeding mechanism 200 is configured by a tank 210 that stores aqueous urea solution, a urea injection valve 230 that injects and feeds aqueous urea solution into the exhaust passage 26, a feeding tube 240 that connects aqueous urea solution injection valve 230 with the tank 210, and a pump 220 located in the feeding tube 240.

The urea injection valve 230 is located in the exhaust passage 26 between the first purification member 30 and the second purification member 40, and the nozzle thereof is open toward the SCR catalyst 41. The urea injection valve 230 is provided with an electromagnetic coil that opens a valve body. When current is conducted through the electromagnetic coil, the valve body is separated from a seat portion of the valve hole so that aqueous urea solution is injected through the urea injection valve 230 to be supplied into the exhaust passage 26. The pressure of aqueous urea solution supplied to the urea injection valve 230 is maintained constant.

The pump 220 is motor-driven and pumps aqueous urea solution from the tank 210 to the urea injection valve 230 when rotating in the normal direction. In contrast, aqueous urea solution is pumped from the urea injection valve 230 to the tank 210 when the pump 220 is rotating in the reverse direction. That is, when the pump 220 rotates in the reverse direction, aqueous urea solution is collected from the urea injection valve 230 and the feeding tube 240 to be returned to the tank 210.

A dispersion plate 60, which promotes atomizing aqueous urea solution by dispersing aqueous urea solution injected through the urea injection valve 230, is located in the exhaust passage 26 between the urea injection valve 230 and the SCR catalyst 41.

The aqueous urea solution injected through the urea injection valve 230 is adsorbed as ammonia by the SCR catalyst 41 when aqueous urea solution reaches the SCR catalyst 41. NOx is reduced and purified by the ammonia adsorbed by the SCR catalyst 41.

Further, the engine 1 includes an exhaust gas recirculation system (hereinafter, referred to as EGR system). The EGR system reduces the combustion temperature in the cylinders by introducing part of the exhaust gas into the intake air to reduce the amount of the generated NOx. The exhaust gas recirculation system includes an EGR passage 13 that communicates the intake passage 3 with the exhaust manifold 8, an EGR valve 15 located in the EGR passage 13, and an EGR cooler 14. The amount of the recirculated exhaust gas, namely the amount of external EGR, which is introduced from the exhaust passage 26 to the intake passage 3, is adjusted by adjusting the opening degree of the EGR valve 15. Further, the temperature of the exhaust gas that flows through the inside of the EGR passage 13 is reduced by the EGR cooler 14.

The engine 1 is equipped with various sensors for detecting the engine operation state. For example, an air flow meter 19 detects an amount GA of the intake air in the intake passage 3. A throttle valve opening degree sensor 20 detects the opening degree of the intake throttle valve 16. An engine rotational speed sensor 21 detects rotational speed of the crankshaft, namely engine rotational speed NE. An accelerator operation amount sensor 22 detects the amount of depressing operation of the accelerator pedal (accelerator operation member), namely an accelerator operation amount ACCP. An ambient temperature sensor 23 detects an ambient temperature THout. A vehicle speed sensor 24 detects a vehicle speed SPD of the vehicle on which the engine 1 is mounted. An ignition switch 25 detects the starting operation and the stopping operation of the engine 1 by the driver of the vehicle.

A first exhaust gas temperature sensor 100 located upstream of the oxidation catalyst 31 detects a first exhaust gas temperature TH1 as an exhaust gas temperature prior to flowing into the oxidation catalyst 31. A differential pressure sensor 110 detects a pressure difference ΔP between an exhaust gas pressure upstream of and an exhaust gas pressure downstream of the DPF catalyst 32.

A second exhaust gas temperature sensor 120 and a first NOx sensor 130 are located in a section in the exhaust passage 26 that is between the first purification member 30 and the second purification member 40 and is upstream of the urea injection valve 230. The second exhaust gas temperature sensor 120 detects a second exhaust gas temperature TH2 as an exhaust gas temperature prior to flowing into the SCR catalyst 41. The first NOx sensor 130 detects an amount of NOx contained in the exhaust air prior to flowing into the SCR catalyst 41, more specifically the concentration (unit: ppm) of NOx as a first NOx concentration N1.

A second NOx sensor 140 that detects the concentration of NOx in the exhaust gas purified by the SCR catalyst 41 as a second NOx concentration N2 is provided in a section of the exhaust passage 26 that is further downstream of the third purification member 50.

Output signals of these sensors are supplied to a control unit 80, which serves as the control portion. The control unit 80 is mainly formed of a microcomputer having a central processing unit (CPU), a read only memory (ROM) storing various types of programs and maps in advance, a random access memory (RAM) for temporarily storing the result of computation of the CPU, a timer counter, an input interface, and an output interface.

The control unit 80 performs, for example, the control of the amount of the fuel injection and the control of the timing of the fuel injection of the fuel injection valves 4a to 4d and the fuel addition valve 5, the control of the pressure of the ejection of the supply pump 10, the control of the amount of driving of an actuator 17 that opens and closes the intake throttle valve 16, the control of the opening degree of the EGR valve 15, and various types of control of the engine 1.

The control unit 80 also performs the control of addition of aqueous urea solution through the above described urea injection valve 230 as one of the exhaust gas purification controls. The control unit 80, as the addition control, computes an amount QE of addition of urea (injection amount of urea) necessary for reducing NOx emitted from the engine 1 in accordance with the amount of emission of NOx. The control unit 80 controls the opening and closing operations of the urea injection valve 230 such that the computed urea addition amount QE is injected through the urea injection valve 230.

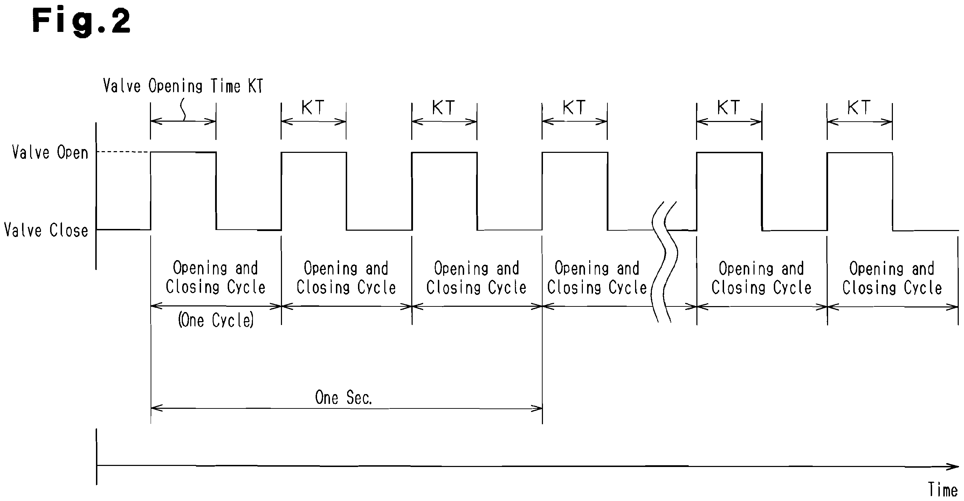

As shown in Fig. 2, the control unit 80 repeats opening and closing of the urea injection valve 230 to cause the urea injection valve 230 to inject aqueous urea solution. More specifically, the opening and closing cycle of the urea injection valve 230 (the length of one cycle of opening and closing the urea injection valve 230) is set by setting addition frequency TS (unit: Hz) for injecting aqueous urea solution. Thereby, the number of times of injection per unit time is set. For example, as shown in Fig. 2, when the addition frequency TS is 3 Hz, the opening and closing cycle of the urea injection valve 230 (the length of one cycle of opening and closing the urea injection valve 230) is one third (sec), that is, the injection is performed three times per second. The control unit 80 adjusts the addition amount of urea per injection by setting the valve opening period in the opening and closing cycle, more specifically, a valve opening time KT (unit: msec) for conducting the current through the urea injection valve 230 to be opened.

As the addition frequency TS becomes greater, the opening and closing cycle of the urea injection valve 230 is reduced so that the number of times of injection per unit time is increased. Accordingly, the amount of aqueous urea solution supplied to the exhaust passage 26 in a certain period is increased. As the valve opening time KT becomes longer, the addition amount of aqueous urea solution per injection is also increased. Accordingly, in this case, the amount of aqueous urea solution supplied to the exhaust passage 26 in a certain period is increased as well.

When the number of times the urea injection valve 230 opens is increased, the components (for example, the valve body for opening and closing a nozzle, and a sealing portion around the nozzle that the valve body contacts) configuring the urea injection valve 230 wear. Accordingly, the reliability of the urea injection valve 230 is reduced. The valve opening period in the opening and closing cycle is prolonged as long as possible so that the addition amount per injection is increased. As for the amount of aqueous urea solution injected in the certain period, the opening and closing cycle of the urea injection valve 230 is prolonged in accordance with the increase of the addition amount per injection so that the amount of aqueous urea solution in accordance with the emission amount of NOx is maintained. When the opening and closing cycle is prolonged as long as possible as described above, the number of times the urea injection valve 230 opens in a certain period becomes less so that the reduction of the reliability of the urea injection valve 230 is limited.

However, the urea injection valve 230 is heated by conducting current through the electromagnetic coil (more specifically, the electromagnetic coil is heated) while the urea injection valve 230 is open. Accordingly, when the valve opening period is prolonged to prolong the opening and closing cycle as long as possible, the urea injection valve 230 is likely to be excessively heated due to the increase of the current conducting time.

The period from when the current starts conducting through the urea injection valve 230 to when the temperature of the urea injection valve 230 reaches a permissible temperature is prolonged in the case where the temperature of the urea injection valve 230 becomes lower. In the present embodiment, an addition process that will be described below is performed. More specifically, an addition process for variably setting the valve opening period such that the valve opening period is longer when the temperature of the urea injection valve 230 is lower is performed. The addition process is performed to limit the excessive heating of the urea injection valve 230 and improve the reliability of the urea injection valve 230.

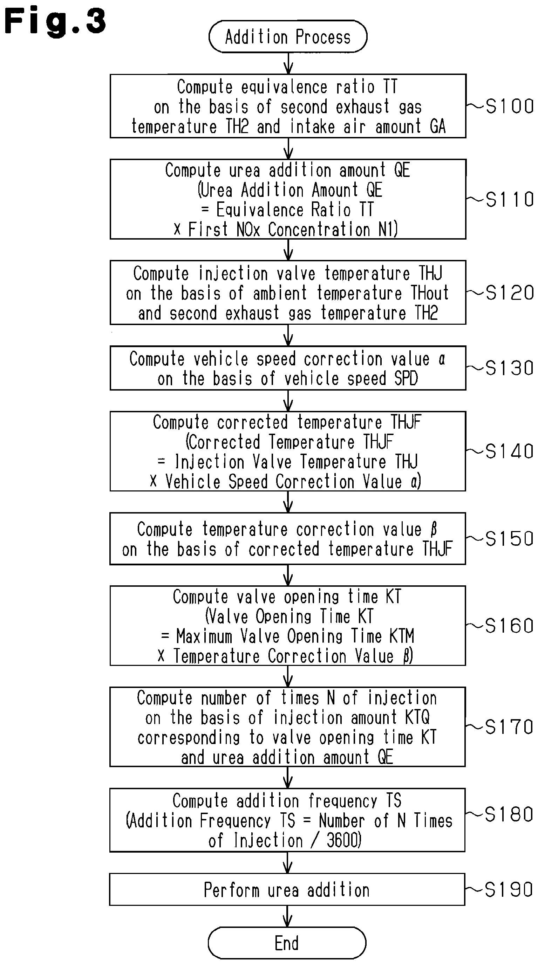

Fig. 3 shows the procedure of the above described addition process. The process is repeated by the control unit 80.

When the process is started, the control unit 80 first sets an equivalence ratio TT on the basis of the second exhaust air temperature TH2 and the intake air amount GA as a substitution value for the amount of flow of the exhaust gas (step S100). The equivalence ratio TT is an addition amount of aqueous urea solution per unit time necessary for reducing NOx without excess or deficiency, more specifically, the addition amount of aqueous urea solution per unit time necessary for reducing NOx per unit concentration (for example, in the present embodiment, an addition amount (g) per hour necessary for completely reducing 1 ppm of NOx). The equivalence ratio TT changes in accordance with the amount of flow of the exhaust gas or the temperature of the exhaust gas. Accordingly, the control unit 80 variably sets the equivalence ratio TT with reference to an appropriately set map on the basis of the second exhaust gas temperature TH2 and the intake air amount GA.

Next, the control unit 80 computes the urea addition amount QE (unit: g/h) in accordance with the present amount of emission of NOx by multiplying the equivalence ratio TT by the first NOx concentration N1 (step S110).

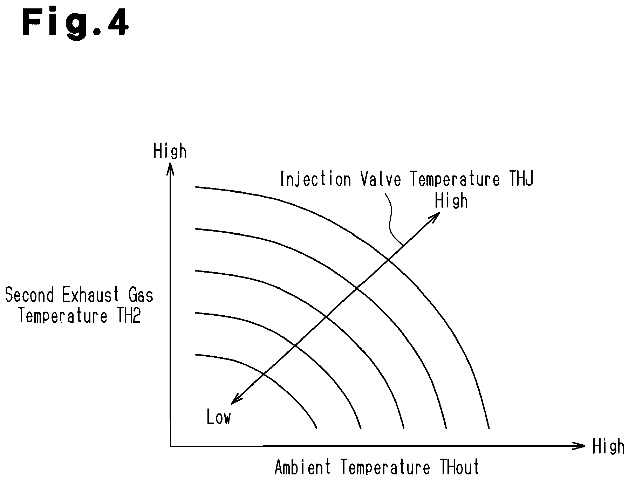

The control unit 80 then computes injection valve temperature THJ on the basis of the ambient air temperature THout and the second exhaust gas temperature TH2 (step S120). The injection valve temperature THJ corresponds to an estimated temperature of the urea injection valve 230. As shown in Fig. 4, the injection valve temperature THJ is variably set so that the injection valve temperature THJ becomes higher when the ambient temperature THout is higher or the second exhaust gas temperature TH2 is higher. The injection valve temperature THJ may be directly detected by providing a temperature sensor in the urea injection valve 230.

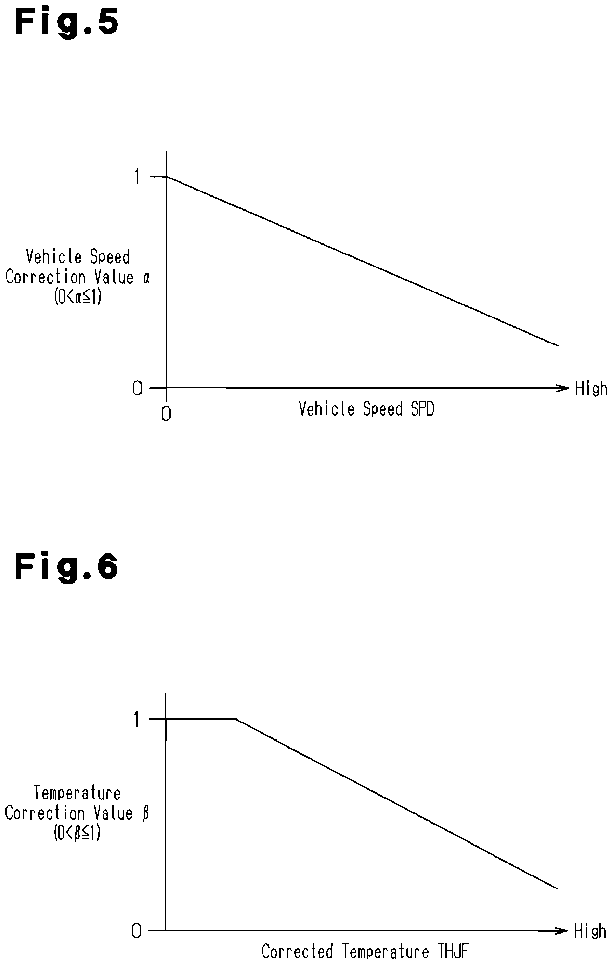

Next, the control unit 80 computes a vehicle speed correction value $\alpha$ on the basis of the vehicle speed SPD (step S130). The vehicle speed correction value $\alpha$ is used for reflecting cooling effect of the urea injection valve 230 by the relative wind onto the injection valve temperature THJ. For example, as shown in Fig. 5, the vehicle speed correction value $\alpha$ is variably set within a range of $0 < \alpha \leq 1$. More specifically, when the vehicle speed SPD is zero, the vehicle speed correction value $\alpha$ is one. As the vehicle speed SPD becomes higher, the vehicle speed correction value $\alpha$ becomes less.

Next, the control unit 80 computes a corrected temperature THJF by multiplying the injection valve temperature THJ by the vehicle speed correction value $\alpha$ (step S140). As the vehicle speed SPD is higher, the vehicle speed correction value $\alpha$ becomes less. Accordingly, as the vehicle speed SPD is higher, the corrected temperature THJF becomes less.

Next, the control unit 80 computes a temperature correction value $\beta$ on the basis of the corrected temperature THJF (step S150). The temperature correction value β is used for correcting the valve opening time such that the valve opening period of the urea injection valve 230 becomes longer as the temperature of the urea injection valve 230 becomes lower. For example, as shown in Fig. 6, the temperature correction value β is a variably set value within a range of $0 < β ≤ 1$. As the corrected temperature THJF becomes lower, the temperature correction value β is set higher.

Next, the control unit 80 computes the valve opening time KT of the urea injection valve 230 by multiplying maximum valve opening time KTM by the above described temperature correction value β (step S160). The maximum valve opening time KTM is described below.

First, continuous conducting of current through the urea injection valve 230 is performed in the valve opening period of the urea injection valve 230. The urea injection valve 230 includes the maximum permissible time with respect to the continuous current conducting time to limit heating in the continuous current conducting time within a permissible range. The maximum permissible time changes according to the temperature of the urea injection valve 230, and is prolonged as the temperature of the urea injection valve 230 becomes lower. The longest maximum permission time is set as the above described maximum valve opening time KTM.

As shown in above mentioned Fig. 6, the lower the corrected temperature THJF, the closer to one the temperature correction value β $(0 < β ≤ 1)$ is set. Therefore, as the corrected temperature THJF becomes lower, the valve opening time KT becomes closer to the maximum valve opening time KTM. That is, the lower the corrected temperature THJF, the more prolonged the maximum permissible time becomes, so that the valve opening time KT is prolonged. The valve opening time KT when the temperature correction value β is one is the same as the maximum valve opening time KTM.

Next, the control unit 80 computes the number of times N of injection per unit time (in the present embodiment, per hour) on the basis of injection amount KTQ corresponding to the valve opening time KT and the urea addition amount QE (step S170). The injection amount KTQ corresponding to the valve opening time KT corresponds to the amount of aqueous urea solution injected through the urea injection valve 230 in the valve opening time KT, namely the addition amount of urea per one injection. The injection amount KTQ (unit: g) is computed on the basis of the pressure of aqueous urea solution supplied to the urea injection valve 230 and the valve opening time KT. When the pressure of aqueous urea solution supplied to the urea injection valve 230 is adjusted to be constant, the injection amount KTQ is computed on the basis of the valve opening time KT. The number of times N of injection per hour is computed on the basis of the following equation (1).

$$N = QE/KTQ \ldots (1)$$

N: The number of times of injection per hour
QE: The urea addition amount (unit: g/h)
KTQ: The injection amount (unit: g) corresponding to the valve opening time KT

Next, the control unit 80 computes the number of times of injection per second by dividing the number of times N of injection per hour by 3600 (sec) and sets the computed value as the above described addition frequency TS (step S190).

The control unit 80 then performs the addition of urea by controlling opening and closing operation of the urea injection valve 230 using the computed valve opening time KT and the addition frequency TS (step S190), and temporarily terminates the process.

The operation of the above described addition process will be described.

The period from when current starts being conducted through the urea injection valve 230 to when the temperature of the urea injection valve 230 reaches the permissible temperature is prolonged as the temperature of the urea injection valve 230 becomes lower. The control unit 80 computes the corrected temperature THJF as the estimated temperature of the urea injection valve 230. The control unit 80 sets the temperature correction value β, which is used for correcting the valve opening time of the urea injection valve 230, on the basis of the computed corrected temperature THJF so that the valve opening time KT is prolonged as the temperature of the urea injection valve 230 becomes lower. Accordingly, the valve opening time KT is prolonged while limiting excessive heating of the urea injection valve 230.

As the valve opening time KT is prolonged, the above described injection amount KTQ is increased. Accordingly, the number of times N of injection per hour computed in step S 170 is reduced as the valve opening time KT is prolonged so that the addition frequency TS computed in step S180 is reduced. As described above, as the valve opening time KT becomes longer, the addition frequency TS is set as a lower frequency so that the opening and closing cycle of the urea injection valve 230 is prolonged. Accordingly, as the valve opening time KT becomes longer, the number of times the urea injection valve 230 opens in a certain period is reduced to improve the reliability of the urea injection valve 230.

When the valve opening time KT is changed in accordance with the temperature of the urea injection valve 230, the addition amount per injection is changed so that the amount of aqueous urea solution injected in a certain period is changed as well. However, as described above, in the addition process, the opening and closing cycle of the urea injection valve 230 is prolonged as the valve opening time KT of the urea injection valve 230 becomes longer. Accordingly, the number of times the urea injection valve 230 opens in the certain period is reduced as the valve opening time KT becomes longer and the addition amount per injection becomes greater. Therefore, even if the valve opening time KT is changed in accordance with the temperature of the urea injection valve 230, the amount of aqueous urea solution injected in a certain period is maintained at an amount in accordance with the amount of emission of NOx.

If the maximum permissible time is set as the valve opening time KT of the urea injection valve 230, the valve opening time KT is prolonged to the maximum while limiting the excessive heating of the urea injection valve 230. The above described maximum permissible time becomes longer as the temperature of the urea injection valve 230 becomes lower. In the above described addition process, the maximum permissible time with respect to the continuous current conducting time of the urea injection valve 230 is set as the maximum valve opening time KTM. The maximum valve opening time KTM is corrected by the above described temperature correction value $\beta$ so that the maximum valve opening time KTM is corrected to be longer as the temperature of the urea injection valve 230 becomes lower. The corrected maximum valve opening time KTM is set as the valve opening time KT. Therefore, the valve opening time KT is prolonged as long as possible in accordance with the temperature state of the urea injection valve 230.

As described above, the present embodiment has the advantages described below.

(1) The valve opening time KT of the urea injection valve 230 is prolonged as the corrected temperature THJF as the estimated temperature of the urea injection valve 230 becomes lower. Further, the addition frequency TS is computed such that the addition frequency TS becomes lower as the valve opening time KT becomes longer. Thereby, the opening and closing cycle of the urea injection valve 230 is prolonged. Accordingly, the reliability of the urea injection valve 230 is improved while limiting excessive heating of the urea injection valve 230. The opening and closing cycle of the urea injection valve 230 is prolonged as the valve opening time KT of the urea injection valve 230 becomes longer. Therefore, even if the valve opening time KT is changed in accordance with the temperature of the urea injection valve 230, the amount of aqueous urea solution injected in the certain period is maintained at an amount in accordance with the amount of emission of NOx.

(2) The maximum permissible time with respect to the continuous current conducting time of the urea injection valve 230 is corrected to be longer as the corrected temperature THJF as the estimated temperature of the urea injection valve 230 becomes lower. Further, the corrected maximum permissible time is set as the valve opening time KT of the urea injection valve 230. Therefore, the valve opening time KT is prolonged as long as possible in accordance with the temperature state of the urea injection valve 230.

Second Embodiment

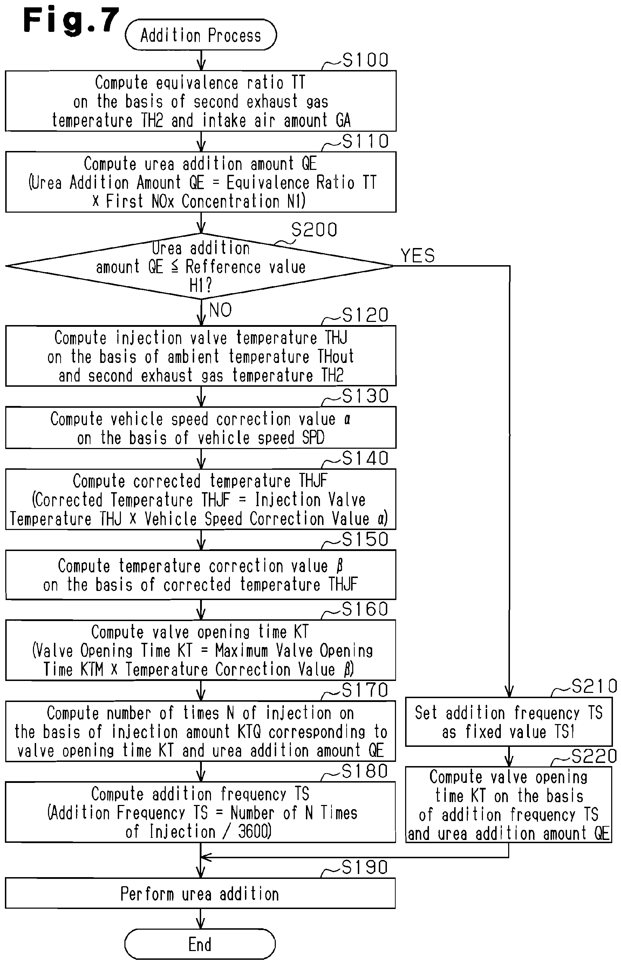

Next, an exhaust gas purification system or additive feeder for an internal combustion engine according to a second embodiment of the present invention will be described with reference to Fig. 7.

In the first embodiment, the valve opening time KT is prolonged as the temperature of the urea injection valve 230 becomes lower. Also, the opening and closing cycle is prolonged as the valve opening time KT becomes longer.

In the case where the opening and closing cycle of the urea injection valve 230 is prolonged, if the amount of aqueous urea solution necessary in accordance with the amount of emission of NOx is small (for example, when the engine is under low load and the amount of emission of NOx is small), the valve opening period in which the urea injection valve 230 is open is prolonged in the opening and closing cycle. Accordingly, the injection interval of aqueous urea solution is excessively prolonged so that the amount of NOx purification is likely to be reduced.

In the addition process according to the present embodiment, the opening and closing cycle of the urea injection valve 230 is set as a fixed value when the amount of aqueous urea solution in accordance with the amount of emission of NOx, namely the above described urea addition amount QE is less than a predetermined reference value H1.

The addition process according to the present embodiment differs from the first embodiment in adding new steps S200 to S220 to the addition process described in the first embodiment. Accordingly, hereinafter, the addition process according to the present embodiment will be described focusing on the differences between the present embodiment and the first embodiment.

As shown in Fig. 7, in the addition process in the present embodiment, the control unit 80 computes the urea addition amount QE in step S110, and then the control unit 80 determines whether or not the urea addition amount QE is less than or equal to the reference value H1 in next step S200.

According to the above described equation (1), the number of times N of injection per hour is reduced as the urea addition amount QE becomes less so that the addition frequency TS becomes lower as well. Accordingly, as the urea addition amount QE becomes less, the opening and closing cycle of the urea injection valve 230 is prolonged so that the valve closing period is prolonged as well. Therefore, the injection interval of aqueous urea solution is prolonged so that the amount of NOx purification is likely to be reduced as described above. The above described reference value H1 is set to reliably determine whether the valve closing period of the urea injection valve 230 is prolonged to an extent that the amount of NOx purification is reduced on the basis of the fact that the urea addition amount QE is less than or equal to the reference value H1.

In step S200, when the control unit 80 determines that the urea addition amount QE is beyond the reference value H1 (step S200: NO), step S120 and the subsequent steps described in the first embodiment are performed. Thereby, when the urea addition amount QE is beyond the reference value H1, the valve opening time KT is variably set on the basis of the corrected temperature THJF, and the addition frequency TS is variably set.

In contrast, in step S200, when the control unit 80 determines that the urea addition amount QE is less than or equal to the reference value H1 (step S200: YES), the control unit 80 sets the addition frequency TS as a fixed value TS1 (step S210). The fixed value TS1 is determined in advance to achieve the opening and closing cycle by which the injection interval of aqueous urea solution necessary for appropriately maintaining the amount of NOx purification is obtained.

Next, the control unit 80 computes the valve opening time KT on the basis of the addition frequency TS set as the fixed value TS1 and the urea addition amount QE (step S220). In step S220, an amount QET of addition of urea per injection is computed on the basis of the following equation (2).

$$QET = (QE/3600) \times (1/TS) \dots (2)$$

QET: The urea addition amount per injection (unit: g)
QE: The urea addition amount (unit: g/h)
TS: The addition frequency (unit: Hz)

The value "urea addition amount QE/3600" in the equation (2) shows an addition amount of urea necessary to be injected per second. The value "urea addition amount QE/3600" is multiplied by the value "1/the addition frequency TS" to obtain the urea addition amount QET per injection. The valve opening time KT corresponding to the urea addition amount QET per injection is set on the basis of the pressure of aqueous urea solution supplied to the urea injection valve 230 and the urea addition amount QET. When the pressure of aqueous urea solution supplied to the urea injection valve 230 is adjusted to be constant, the valve opening time KT is computed on the basis of the urea addition amount QET per injection.

The control unit 80 then performs the addition of urea by controlling the opening and closing operation of the urea injection valve 230 using the addition frequency TS set as the fixed value TS1 in step S210 and the computed valve opening time KT in step S220 (step S190), and temporarily terminates the process.

An operation of the addition process according to the present embodiment will be described.

When the urea addition amount QE is less than the reference value H1, the variable setting of the addition frequency is cancelled to set the fixed value TS1 in place so that the opening and closing cycle of the urea injection valve 230 is set as a fixed value. When the opening and closing cycle of the urea injection valve 230 is set as the fixed value, prolongation of the opening and closing cycle due to the variable setting is limited. Accordingly, the injection interval of aqueous urea solution when the amount of aqueous urea solution injected through the urea injection valve 230 is small, namely the urea addition amount QE is small is appropriately set so that the reduction of the amount of NOx purification is limited.

Even if the opening and closing cycle of the urea injection valve 230 is fixed by setting the addition frequency TS as the fixed value TS1 in step S210, the valve opening time KT is variably set in step S220 so that the amount of aqueous urea solution in accordance with the amount of emission of NOx is injected through the urea injection valve 230.

As described above, according to the present embodiment, in addition to the advantages as described in the above (1) and (2), the following advantage is obtained.

(3) When the urea addition amount QE is less than the reference value H1, the addition frequency TS is set as the fixed value TS1 so that the opening and closing cycle of the urea injection valve 230 is set as the fixed value. Accordingly, the injection interval of aqueous urea solution when the amount of aqueous urea solution injected through the urea injection valve 230 is small is appropriately set. Therefore, the reduction of the amount of NOx purification due to the prolongation of the injection interval of aqueous urea solution is limited.

The above embodiments may be modified as follows.

- The above described vehicle speed correction value $\alpha$ is obtained to take into consideration the cooling effect of the urea injection valve 230 by the relative wind. However, the injection valve temperature THJ may be corrected according in another manner. That is, the injection valve temperature THJ may be corrected such that the estimated temperature of the urea injection valve 230 becomes lower as the vehicle speed SPD increases.

- The above described temperature correction value $\beta$ is obtained to vary the valve opening time KT in accordance with the temperature of the urea injection valve 230. However, the maximum valve opening time KTM may be corrected according in another manner. That is, the maximum valve opening time KTM may be corrected such that the valve opening time KT becomes longer as the temperature of the urea injection valve 230 becomes lower.

- The maximum valve opening time KTM is corrected in accordance with temperature so that the valve opening time KT of the urea injection valve 230 is prolonged as the temperature of the urea injection valve 230 becomes lower. However, the valve opening time KT may be variably set in another manner. That is, the valve opening time KT may be prolonged as the temperature of the urea injection valve 230 becomes lower. Accordingly, time shorter than the maximum valve opening time KTM is set as reference valve opening time, for example. The reference valve opening time may be corrected by the above described temperature correction value β.

- The injection valve temperature THJ is corrected by the vehicle speed correction value α. However, the correction may be omitted.

- An actuator that moves the valve body of the urea injection valve 230 is an electromagnetic coil. The injection valve may include another actuator such as a piezoelectric device.

- The first NOx sensor 130 directly detects the concentration of NOx, which is proportional to the amount of emission of NOx. Further, the amount of emission of NOx may be indirectly detected by estimating the concentration of NOx and the amount of emission of NOx from the engine operation state. The urea addition amount QE may be computed in accordance with the estimated amount of emission of NOx.

- Aqueous urea solution is used as additive for reducing and purifying NOx. Other additive may be used. For example, dimethyl ether may be used as the additive. Moreover, engine fuel containing HC constituent may be used as the additive.

- The additive feeder disclosed in the above described embodiments adds additive to purify NOx. However, the present invention may also be applied to an additive feeder that injects additive through an injection valve to purify other exhaust gas components.

Description of the Reference Numerals

1...Engine, 2... Cylinder Head, 3... Intake Passage, 4a to 4d... Fuel Injection Valves, 5...Fuel Addition Valve, 6a to 6d... Exhaust Ports, 7...Intake Manifold, 8...Exhaust Manifold, 9...Common Rail, 10...Supply Pump, 11...Turbocharger, 11v...Nozzle Vane, 13...EGR Passage, 14...EGR Cooler, 15...EGR Valve, 16...Intake Throttle Valve, 17...Actuator, 18...Intercooler, 19...Air Flow Meter, 20...Throttle Valve Opening Degree Sensor, 21...Engine Rotation Speed Sensor, 22...Accelerator Operation Amount Sensor, 23...Ambient Temperature Sensor, 24...Vehicle Speed Sensor, 25...Ignition Sensor, 26...Exhaust Passage, 27...Fuel Feeding Tube, 30...First Purification Member, 31...Oxidation Catalyst, 32...Filter, 40...Second Purification Member, 41...NOx Purification Catalyst (Selective Reduction Type NOx Catalyst: SCR Catalyst), 50...third Purification Member, 51...Ammonia Oxidation Catalyst, 60...Dispersion Plate, 80...Control Unit, 100...First Exhaust Gas Temperature Sensor, 110... Differential Pressure Sensor, 120...Second Exhaust Gas Temperature Sensor, 130...First NOx Sensor, 140...Second NOx Sensor, 200...Aqueous Urea Solution Feeding Mechanism, 210...Tank, 220...Pump, 230...Urea Injection Valve, and 240... Feeding Tube.

**Claims**

1. An exhaust gas purification system for an internal combustion engine (1), comprising:

   a catalyst (41) that purifies an exhaust gas component emitted from the internal combustion engine (1);
   an injection valve (230) that injects and adds an additive to the catalyst (41); and
   a control unit (80) configured to control an opening and closing cycle of the injection valve (230) and a valve opening period in the opening and closing cycle to allow the injection valve (230) to inject an amount of the additive in accordance with an amount of emission of the exhaust gas component, the exhaust gas purification system being **characterized in that**
   the control unit (80) is configured to continuously prolong the valve opening period as a temperature of the injection valve (230) becomes lower, while the control unit (80) prolongs the opening and closing cycle as the valve opening period becomes longer to maintain the total amount of the additive injected in accordance with the amount of emission of the exhaust gas component.

2. The exhaust gas purification system for an internal combustion engine (1) according to claim 1, wherein the control unit (80) is configured to correct a maximum permissible period for a continuous current conducting period of the injection valve (230) to be longer as the temperature of the injection valve (230) becomes lower, and sets the corrected maximum permissible period to the valve opening period.

3. The exhaust gas purification system for an internal combustion engine (1) according to claim 1 or 2, wherein the control unit (80) is configured to set the opening and closing cycle to a fixed value when the amount of the additive in accordance with the amount of emission of the exhaust gas component is less than a reference value.

4. The exhaust gas purification system for an internal combustion engine (1) according to any one of claims 1 to 3, wherein the catalyst (41) purifies NOx in the exhaust gas, and the additive is a reducing agent that reduces NOx.

**Patentansprüche**

**1.** Abgasreinigungssystem für eine Verbrennungskraftmaschine (1), aufweisend:

einen Katalysator (41), der einen Abgasbestandteil reinigt, der aus der Verbrennungskraftmaschine (1) ausgestoßen wird;
ein Einspritzventil (230), das dem Katalysator (41) ein Additiv einspritzt und beigibt; und
eine Steuereinheit (80), die so konfiguriert ist, dass sie einen Öffnungs- und Schließzyklus des Einspritzventils (230) und eine Ventilöffnungsdauer in dem Öffnungs- und Schließzyklus steuert, um es dem Einspritzventil (230) zu ermöglichen, eine Menge des Additivs in Übereinstimmung mit einer Emissionsmenge des Abgasbestandteils einzuspritzen, wobei das Abgasreinigungssystem **dadurch gekennzeichnet ist, dass**
die Steuereinheit (80) so konfiguriert ist, dass sie kontinuierlich die Ventilöffnungsdauer verlängert, während eine Temperatur des Einspritzventils (230) niedriger wird, während die Steuereinheit (80) den Öffnungs- und Schließzyklus verlängert, während die Ventilöffnungsdauer länger wird, um die Gesamtmenge des Additivs, das in Übereinstimmung mit der Emissionsmenge des Abgasbestandteils eingespritzt wird, beizubehalten.

**2.** Abgasreinigungssystem für eine Verbrennungskraftmaschine (1) nach Anspruch 1, wobei die Steuereinheit (80) so konfiguriert ist, dass sie eine maximal zulässige Dauer für eine dauerstromführende Dauer des Einspritzventils (230) korrigiert, so dass sie länger ist, während die Temperatur des Einspritzventils (230) niedriger wird, und die korrigierte maximal zulässige Dauer auf die Ventilöffnungsdauer einstellt.

**3.** Abgasreinigungssystem für eine Verbrennungskraftmaschine (1) nach Anspruch 1 oder 2, wobei die Steuereinheit (80) so konfiguriert ist, dass sie den Öffnungs- und Schließzyklus auf einen Festwert einstellt, wenn die Menge des Additivs in Übereinstimmung mit der Emissionsmenge des Abgasbestandteils niedriger ist als ein Referenzwert.

**4.** Abgasreinigungssystem für eine Verbrennungskraftmaschine (1) nach einem der Ansprüche 1 bis 3, wobei der Katalysator (41) $NO_x$ in dem Abgas reinigt, und das Additiv ein Reduktionsmittel ist, das $NO_x$ reduziert.

**Revendications**

**1.** Système de purification des gaz d'échappement pour un moteur à combustion interne (1), comprenant :

un catalyseur (41) qui purifie un composant de gaz d'échappement émis à partir du moteur à combustion interne (1) ;
une soupape à injection (230) qui injecte et ajoute un additif au catalyseur (41) ; et
une unité de commande (80) configurée pour commander un cycle d'ouverture et de fermeture de la soupape à injection (230) et une période d'ouverture de la soupape dans le cycle d'ouverture et de fermeture pour permettre à la soupape à injection (230) d'injecter une quantité d'additif en fonction d'une quantité d'émission du composant de gaz d'échappement, le système de purification du gaz d'échappement étant **caractérisé en ce que**
l'unité de commande (80) est configurée pour prolonger en continu la période d'ouverture de la soupape dès qu'une température de la soupape à injection (230) diminue, alors que l'unité de commande (80) prolonge le cycle d'ouverture et de fermeture dès que la période d'ouverture de la soupape s'allonge pour maintenir la quantité totale d'additif injecté en fonction de la quantité d'émission du composant de gaz d'échappement.

**2.** Système de purification des gaz d'échappement pour un moteur à combustion interne (1) selon la revendication 1, dans lequel l'unité de commande (80) est configurée pour corriger une période admissible maximale afin qu'une période de conduction de courant continu de la soupape à injection (230) soit plus longue dès que la température de la soupape à injection (230) diminue, et règle la période admissible maximale corrigée pour la période d'ouverture de la soupape.

**3.** Système de purification des gaz d'échappement pour un moteur à combustion interne (1) selon la revendication 1 ou 2, dans lequel l'unité de commande (80) est configurée pour régler le cycle d'ouverture et de fermeture à une valeur fixe lorsque la quantité d'additif en fonction de la quantité d'émission du composant du gaz d'échappement est inférieure à une valeur de référence.

**4.** Système de purification des gaz d'échappement pour un moteur à combustion interne (1) selon l'une quelconque des revendications 1 à 3, dans lequel le catalyseur (41) purifie les NOx dans le gaz d'échappement, et l'additif est un agent réducteur qui réduit les NOx.

**Fig.1**

EP 2 905 439 B1

# Fig.2

# Fig.3

```
        ┌──────────────────────────┐
        │      Addition Process    │
        └──────────────────────────┘
                    │
                    ▼
┌───────────────────────────────────────┐
│       Compute equivalence ratio TT    │
│       on the basis of second exhaust gas │  ~S100
│  temperature TH2 and intake air amount GA │
└───────────────────────────────────────┘
                    │
                    ▼
┌───────────────────────────────────────┐
│     Compute urea addition amount QE    │
│          (Urea Addition Amount QE      │  ~S110
│            = Equivalence Ratio TT      │
│         X First NOx Concentration N1)  │
└───────────────────────────────────────┘
                    │
                    ▼
┌───────────────────────────────────────┐
│  Compute injection valve temperature THJ │
│   on the basis of ambient temperature THout │  ~S120
│   and second exhaust gas temperature TH2 │
└───────────────────────────────────────┘
                    │
                    ▼
┌───────────────────────────────────────┐
│  Compute vehicle speed correction value α │  ~S130
│        on the basis of vehicle speed SPD │
└───────────────────────────────────────┘
                    │
                    ▼
┌───────────────────────────────────────┐
│     Compute corrected temperature THJF │
│         (Corrected Temperature THJF    │  ~S140
│          = Injection Valve Temperature THJ │
│         X Vehicle Speed Correction Value α) │
└───────────────────────────────────────┘
                    │
                    ▼
┌───────────────────────────────────────┐
│   Compute temperature correction value β │  ~S150
│  on the basis of corrected temperature THJF │
└───────────────────────────────────────┘
                    │
                    ▼
┌───────────────────────────────────────┐
│       Compute valve opening time KT    │
│          (Valve Opening Time KT        │  ~S160
│       = Maximum Valve Opening Time KTM  │
│        X Temperature Correction Value β) │
└───────────────────────────────────────┘
                    │
                    ▼
┌───────────────────────────────────────┐
│    Compute number of times N of injection │
│       on the basis of injection amount KTQ │  ~S170
│     corresponding to valve opening time KT │
│          and urea addition amount QE    │
└───────────────────────────────────────┘
                    │
                    ▼
┌───────────────────────────────────────┐
│       Compute addition frequency TS    │
│  (Addition Frequency TS = Number of N Times │  ~S180
│           of Injection / 3600)         │
└───────────────────────────────────────┘
                    │
                    ▼
┌───────────────────────────────────────┐
│          Perform urea addition         │  ~S190
└───────────────────────────────────────┘
                    │
                    ▼
        ┌──────────────────────────┐
        │           End            │
        └──────────────────────────┘
```

# Fig.4

# Fig.5

Vehicle Speed
Correction Value $\alpha$
$(0<\alpha\leqq1)$

Vehicle Speed SPD

High

# Fig.6

Temperature
Correction Value $\beta$
$(0<\beta\leqq1)$

Corrected Temperature THJF

High

# Fig.7

**Addition Process**

S100
Compute equivalence ratio TT
on the basis of second exhaust gas
temperature TH2 and intake air amount GA

S110
Compute urea addition amount QE
(Urea Addition Amount QE = Equivalence Ratio TT
× First NOx Concentration N1)

S200
Urea addition
amount QE ≤ Refference value
H1?

YES →

NO ↓

S120
Compute injection valve temperature THJ
on the basis of ambient temperature THout
and second exhaust gas temperature TH2

S130
Compute vehicle speed correction value α
on the basis of vehicle speed SPD

S140
Compute corrected temperature THJF
(Corrected Temperature THJF = Injection Valve
Temperature THJ × Vehicle Speed Correction Value α)

S150
Compute temperature correction value β
on the basis of corrected temperature THJF

S160
Compute valve opening time KT
(Valve Opening Time KT = Maximum Valve Opening
Time KTM × Temperature Correction Value β)

S170
Compute number of times N of injection on
the basis of injection amount KTQ corresponding to
valve opening time KT and urea addition amount QE

S180
Compute addition frequency TS
(Addition Frequency TS = Number of N Times
of Injection / 3600)

S210
Set addition frequency TS
as fixed value TS1

S220
Compute valve opening
time KT on the basis
of addition frequency TS
and urea addition amount QE

S190
Perform urea addition

**End**

17

**EP 2 905 439 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010071255 A
- DE 10322155 A1